# EUROPÄISCHE PATENTSCHRIFT

(11) **EP 1 832 468 B1**
(45) Veröffentlichungstag und Bekanntmachung des Hinweises auf die Patenterteilung: **03.11.2010**
(21) Anmeldenummer: 07003526.6
(22) Anmeldetag: 21.02.2007
(51) Int. Cl.: B60N 2/24, B60R 7/04

(54) **Sitz eines Nutzfahrzeugs mit wendbarer Sitzfläche**
Seat of a commercial vehicle with rotatable seat
Siège de véhicule utilitaire doté d'une surface d'assise tournante

(30) Priorität: 07.03.2006 AT 3762006
(43) Veröffentlichungstag der Anmeldung: 12.09.2007
(73) Patentinhaber: MAN Nutzfahrzeuge Österreich AG, 1230 Wien (AT)
(72) Erfinder: Allmann, Christian Ing., 1190 Wien (AT)

(56) Entgegenhaltungen:
- DE-U1- 20 110 630
- FR-A- 2 783 217

## Beschreibung

Die Erfindung bezieht sich auf einen auf der Oberseite gepolsterten Sitz, insbesondere eines Lastkraftwagens, gemäß dem Oberbegriff des Anspruchs 1.

Aus der DE 37 050 59 A1 ist ein Kraftfahrzeugsitz mit nach vorn auf den Sitzteil klappbarer Rückenlehne bekannt. Auf der Rückseite im oberen Bereich der Rückenlehne ist ein plattenförmiger Wandteil schwenkbar gelagert, an dem um eine dazu parallele Schwenkachse ein weiterer plattenförmiger Wandteil schwenkbar gehalten ist. Beide Wandteile können aneinander geklappt an die Rückseite der Rückenlehne angeklappt werden und bilden dann bei nach vorn umgeklappter Rückenlehne eine harte, ebene Ablagefläche für Gepäck. Ferner können beide Wandteile zusammen relativ zur umgeklappten Rückenlehne in eine Hochlage hochgeklappt und so festgestellt werden, so dass ein nach oben offener Behälter für Gepäckgut entsteht, der bei Abschwenken des zweiten Wandteils vom ersten Wandteil und verriegeln mittels der Verriegelungseinrichtung der Rückenlehne noch verschließbar ist, wobei der zweite Wandteil den Behälterdeckel bildet. Diese Konstruktionsweise hat sich in der Vergangenheit bewährt, um im Inneren des Fahrerhauses eine Ablagefläche bzw. einen offenen Behälter für Gepäckgut zu schaffen.

Aus der FR 2 783 217 ist ein Fahrzeugsitz bekannt, der eine Lehne und einen Sitz umfasst. Der Sitz weist einen festen Sitzfuß mit einem Rahmen auf, in den ein Kissen eingefügt ist, das herausnehmbar ist. Das Kissen weist übereinander liegend einen ersten und einen zweiten Bereich auf. Der erste Bereich besteht aus Schaumstoff und dient als Sitzoberfläche für einen Passagier. Der zweite Bereich besteht aus festem Kunststoff. Er verfügt über mindestens eine Ausnehmung. Die Ausnehmung dient dabei als Staufach, wenn das Kissen mit der Oberseite des ersten Bereichs nach unten umgedreht wurde.

Aus der DE 201 10 630 U1 ist ein gattungsgemäßer Sitz bekannt, mit einem unteren, eine im Wesentlichen etwa horizontale oder leicht geneigte Sitzfläche aufweisenden Sitzpolsterteil und einem Sitzsegment mit einer Oberseite und einer gegenüberliegenden Unterseite. Das Sitzsegment ist über Führungsmittel zwischen einer ersten und einer zweiten Stellung bewegbar geführt. In der ersten Stellung ist das Sitzsegment in dem Sitzpolsterteil versenkt und bildet mit der Oberseite einen Teil der Sitzfläche des Sitzpolsterteils. In der zweiten Stellung ist das Sitzsegment aus der Sitzfläche heraus gegenüber dem Sitzpolsterteil erhöht angeordnet. Die Führungsmittel sind derart ausgebildet, dass sie beim Überführen des Sitzsegmentes zwischen seinen beiden Stellungen zusätzlich zu dem Höhenversatz jeweils eine zwangsläufige Wendebewegung um etwa 180° bewirken, so dass das Sitzsegment in der erhöhten zweiten Stellung mit seiner Unterseite von dem Sitzpolsterteil weg nach oben weist.

Aufgabe der vorliegenden Erfindung ist es, im Fahrerhaus eines Nutzfahrzeugs einen Sitz mit einer ortsfesten Rückenlehne zu schaffen, bei dem das Innere des Sitzfußes zugänglich bleibt, während die Sitzfläche außer zum Sitzen, auch einer Vielzahl anderer Nutzungen zuführbar ist.

Die Aufgabe wird erfindungsgemäß dadurch gelöst, dass die Aufnahmeschale an einem Scharnier befestigt ist, das entlang der Oberkante einer Vorderseite des Sitzfußes verläuft und dass die Aufnahmeschale des Sitzes um eine, entlang der Oberkante durch das Scharnier verlaufenden Achse schwenkbar gelagert ist und nach Herausschwenken aus einer Ausgangsposition um eine senkrecht zur Achse verlaufende Achse drehbar gelagert ist.

Der Vorteil der Erfindung besteht darin, dass der auf der Oberseite gepolsterte Sitz auf Grund des erfindungsgemäßen Schwenk-Drehmechanismus in eine vorwiegend ebene Oberfläche umrüstbar ist, die betretbar ist und/ oder als Stellfläche von beispielsweise elektrischen Bordausrüstungen verwendbar ist. Elektrische Bordausrüstungen können z.B. Personal Computer, elektronische Kommunikationsmittel oder ähnliches sein. Die elektrischen Bordausrüstungen sind lösbar aber verliersicher an der Stellfläche befestigbar. Sie sind im Verbund mit der Stellfläche mit Hilfe des Schwenk-Drehmechanismus der Art in eine Ausgangsposition des Sitzes bringbar, dass die Bordausrüstung zur Fahrbahn weisend, in mindestens eine Öffnung im Sitzfuß eingreift und die Polsterung des Sitzes dem Dachhimmel der Fahrzeugkabine zugewandt ist. Als Ausgangsposition des Sitzes wird die Position bezeichnet, in der der Sitz auf dem Sitzfuß in einer etwa parallelen Position zur Fahrbahn aufliegt und mit seiner Polsterung dem Dachhimmel der Fahrerhauses und mit seiner Rückseite dem Fahrzeugboden zugekehrt ist.

Gemäß der Erfindung kann der Sitz mittels eines, sich entlang der Oberkante der Vorderseite des Sitzes erstreckenden Scharniers aus einer, parallel zur Fahrbahn angeordneten Ausgangsposition schwenkbar sein. Die Sitzfläche ist durch zu Hilfenahme eines Scharniers kraftsparend und leicht aus ihrer Ausgangsposition auf dem Sitzfuß herausschwenkbar.

Gemäß einer Ausführungsform der Erfindung kann die Aufnahmeschale nach Herausschwenken um etwa 90° aus der Ausgangsposition um eine, senkrecht zum Scharnier, etwa durch dessen Mitte verlaufende Drehachse drehbar sein.

Gemäß einer Ausführungsform der Erfindung kann die durch das Scharnier verlaufende Drehachse mit diesem verbunden ist.

Gemäß einer Ausführungsform der Erfindung kann die Aufnahmeschale in einer gegenüber der Ausgangsposition um 180° um die Drehachse gedrehten Stellung, nach vorne in Richtung auf den Sitzfuß, in eine der Ausgangsposition entsprechende Position schwenkbar sein.

Gemäß einer Ausführungsform der Erfindung kann die Aufnahmeschale auf ihrer Rückseite betretbar sein.

Gemäß einer Ausführungsform der Erfindung kann der Sitz zur Sicherstellung der Betretbarkeit abgestützt sein.

Gemäß einer Ausführungsform der Erfindung kann die Rückseite des Sitzes einen trittfesten Belag aufweisen.

Gemäß einer Ausführungsform der Erfindung kann die Rückseite des Sitzes eine strukturierte Stellfläche zum Abstellen von Gegenständen aufweisen.

Gemäß einer Ausführungsform der Erfindung kann die Stellfläche Vorrichtungen zur lösbaren Befestigung der abgestellten Gegenstände aufweisen.

Gemäß einer Ausführungsform der Erfindung kann die Rückseite des Sitzes Aufnahmevorrichtungen zur verliersicheren Halterung der Bordausrüstung aufweisen. Es ist denkbar, Halterungen für Papiere und Karten vorzusehen oder in der Rückseite Bordwerkzeug einzuklipsen.

Gemäß einer Ausführungsform der Erfindung kann der Sitz zur lösbaren Verankerung gegenüber dem Sitzfuß eine Arretierung aufweisen, die an der Seite des Sitzfußes angeordnet ist, die dem Scharnier gegenüber liegt.

Weitere vorteilhafte Ausgestaltungen und zweckmäßige Fortbildungen des erfindungsgemäßen Sitzes sind aus den nachstehenden Beispielsbeschreibungen anhand der Zeichnung ersichtlich. Dabei zeigt:
- Fig. 1: in den Abb. 1 bis 5 die Abfolge der Schwenk- und Drehbewegungen der Sitz- fläche nach Maßgabe der Erfindung,
- Fig. 2: den Sitz in Seitenansicht,
- Fig. 3: den Sitz in Vorderansicht und
- Fig. 4: den Sitz in Draufsicht.

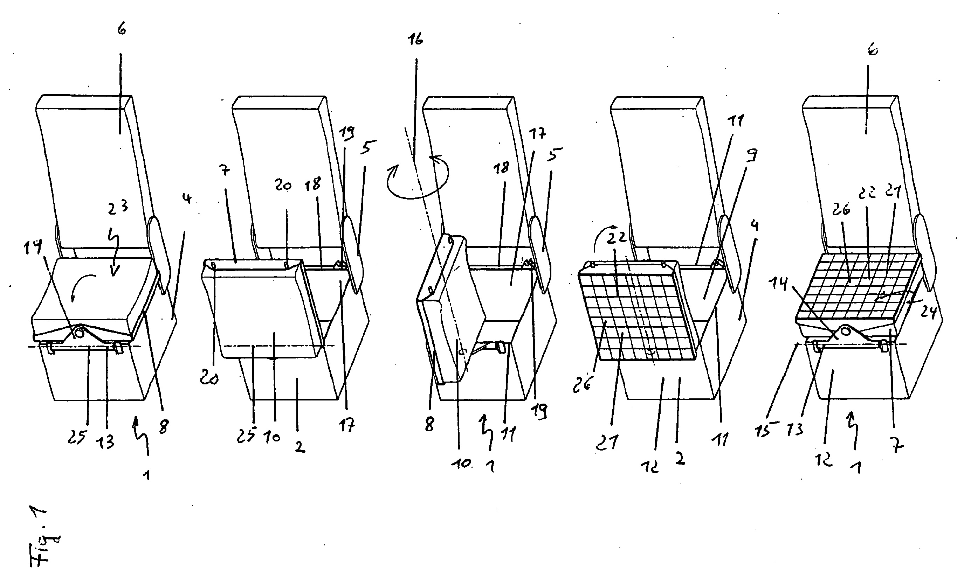

Fig. 1 zeigt den Sitz des Nutzfahrzeugs in unterschiedlichen Positionen. Der Sitz 1 weist nach Abb. 1 einen Sitzfuß 2 auf, an dessen, der Rückwand des Fahrerhauses (nicht gezeigt) zugekehrtem Ende 4 mit Hilfe zweier einander gegenüber liegender Wangen 5 eine Rückenlehne 6 am Sitzfuß 2 angeordnet ist. Der Sitz 1 umfasst eine Aufnahmeschale 7 mit ihren Einfassungen 8 und einem innerhalb der Einfassungen 8 angeordneten Sitzpolster 10. Auf dem Sitzfuß 2 ruht die Aufnahmeschale 7, welche die Einfassungen 8 aufweist. In der Aufnahmeschale 7 ist das Sitzpolster 10 dargestellt. Entlang der Oberkante 11 der Vorderseite 12 des Sitzfußes 2 erstreckt sich ein Scharnier 13. Das Scharnier 13 ist über eine Zunge 14 mit der Aufnahmeschale 7 verbunden. Die Aufnahmeschale 7 des Sitzes 1 ist im Verbund mit dem Scharnier 13 um die Achse 15 schwenkbar gelagert. Denkbar ist, dass sich das Scharnier alternativ entlang der Oberkante einer der beiden Seiten des Sitzfußes 2 erstreckt. Die Schwenk- und/oder Drehbewegung ist manuell oder z. B. auch durch einen Motor betrieben durchführbar.

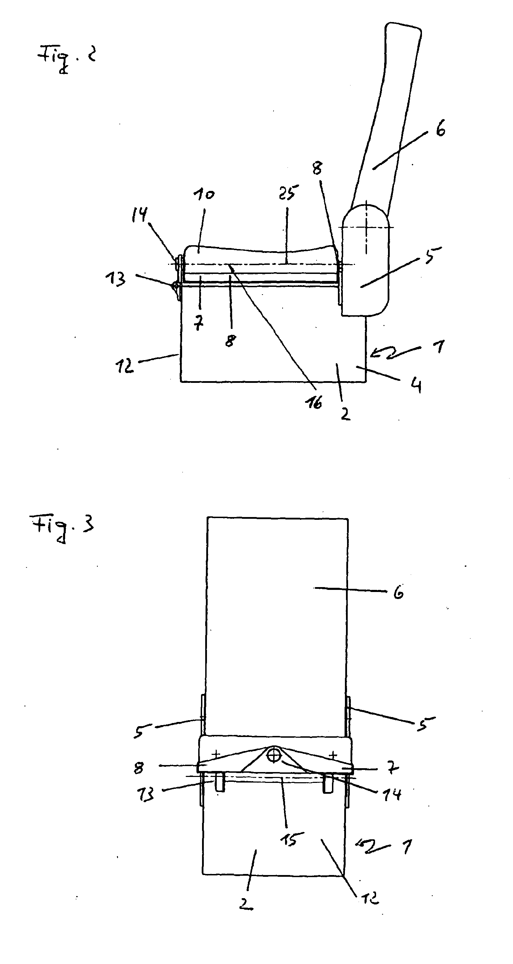

Die Abb. 2 der Fig. 1 zeigt einen Sitz 1 nach Abb. 1. Entgegen der Abb. 1 ist hier jedoch die Aufnahmeschale 7 mit dem darin angeordneten Sitzpolster 10 über das Scharnier 13 um die Achse 15 in einem Winkel von etwa 90° gegenüber der Ausgangsposition 23 in Richtung zum Dach des Fahrerhauses (nicht gezeigt) herausgeschwenkt. An der Oberkante 18 der rückwärtigen Seitenwand 17 des Sitzfußes 2 sind Arretierungen 19 vorgesehen, die Zapfen 20 aufnehmen sollen, die an der rückwärtigen Einfassung 8 der Aufnahmeschale 7 angeordnet sind. Die Zapfen 20 sind zum lösbaren Eingriff in die Arretierungen 19 vorgesehen.

Abb. 3 zeigt den Sitz 1 wie in Abb. 2. Die an der Zunge 14 angeschlagene Aufnahmeschale 7 ist mit dem darin zur Anlage gebrachten Sitzpolster 10 entgegen dem Uhrzeigersinn um 90° um die etwa senkrecht durch das Scharnier 13 verlaufende Drehachse 16 gedreht. Die mit dem Scharnier 13 verbundene Zunge 14 weist von der Rückenlehne 6 weg und trägt die Drehachse 16.

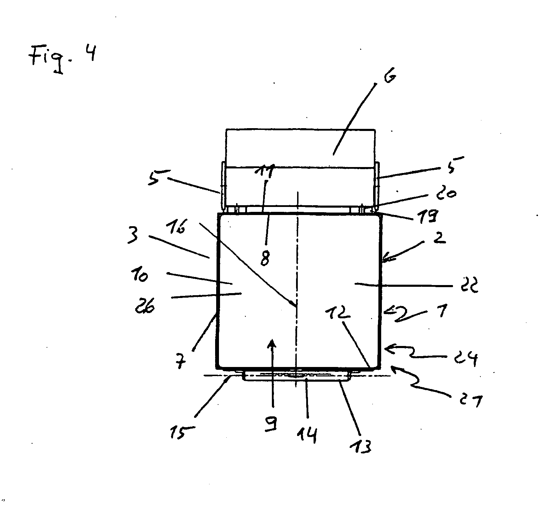

Abb. 4 zeigt den Sitz 1 entsprechend der Abb. 3. Die Aufnahmeschale 7 und mit ihr das Sitzpolster 10 sind gegenüber der Abb. 3 entgegen dem Uhrzeigersinn um die Drehachse 16 um weitere 90° gedreht. Das in der Aufnahmeschale 7 angeordnete Sitzpolster 10 ist der Rückenlehne 6 zugekehrt. An der Rückseite 21 der Aufnahmeschale 7 ist ein trittfester Belag 22 erkennbar.

Abb. 5 zeigt den Sitz 1 entsprechend der Abb. 4. Die an der Zunge 14 des Scharniers 13 angeschlagene Aufnahmeschale 7 ist in einer, gegenüber der Ausgangsposition 23 um 180° um die Drehachse 16 gedrehten Stellung um die durch das Scharnier 13 verlaufende Achse 15 nach vorne, in Richtung auf den Sitzfuß 2 verschwenkt und liegt einer der Ausgangsposition 23 entsprechenden Position auf der Oberkante 11 des Sitzfußes 2 auf. Die Zapfen 20 rasten dabei in die Arretierungen 19 ein.
Fig. 2 zeigt die Seitenansicht des Sitzes 1. Am hinteren, der Rückwand des Fahrerhauses (nicht gezeigt) zugekehrten Ende 4 des Sitzfußes 2, ist die Wange 5 zu erkennen, die die Verbindung des Sitzfußes 2 mit der Rückenlehne 6 herstellt. Der Sitzfuß 2 wird durch die Aufnahmeschale 7 nach oben abgeschlossen. Das in der Aufnahmeschale 7 angeordnete Sitzpolster 10 weist zum Dach des Fahrerhauses (nicht gezeigt) des Nutzfahrzeugs. An der von der Rückenlehne 6 abgekehrten Vorderseite 12 des Sitzfußes 2 ist das Scharnier 13 sowie die Zunge 14 erkennbar. An der Zunge 14 ist die Drehachse 16 angeordnet, die die Einfassung 8 der Aufnahmeschale 7 durchsetzt und die mit der dem Scharnier 13 gegenüberliegenden Einfassung 8 der Aufnahmeschale 7, verbunden ist. Der Verlauf der Drehachse 16 ist durch die strichpunktierte Linie 25 dargestellt.
Fig. 3 zeigt die Frontansicht des Sitzes 1. Der Sitzfuß 2 ist über die Wangen 5 mit der Rückenlehne 6 verbunden und ist durch die Aufnahmeschale 7 abgeschlossen. An der Vorderseite 12 des Sitzfußes 2 ist das Scharnier 13 erkennbar, das mit der Zunge 14 verbunden ist. Die Einfassung der Aufnahmeschale 7 ist mit der Bezugsziffer 8 bezeichnet. Die durch das Scharnier 13 verlaufende Achse ist durch die Linie 15 zu erkennen.
Fig. 4 zeigt den erfindungsgemäßen Sitz 1 in Draufsicht. Der Sitzfuß 2 ist über die Wangen 5 mit der Rückenlehne 6 verbunden. Die Aufnahmeschale 7 ruht auf dem Sitzfuß 2, sodass die Zapfen 20 in den Arretierungen 19 einrasten. An der der Rückenlehne 6 abgewandten Vorderseite 12 des Sitzfußes 2 ist das Scharnier 13 erkennbar. Durch das Scharnier 13 verläuft die Achse 15. In einem etwa rechtwinkligen Verlauf gegenüber dem Scharnier 13 verläuft die Drehachse 16. Das in der Aufnahmeschale 7 zur Anlage gebrachte Sitzpolster ist mit Bezugsziffer 10 bezeichnet. Das Sitzpolster 10 sitzt dabei unverrutschbar aber entnehmbar in der Aufnahmeschale 7. Das Sitzpolster 10 bietet dem Nutzer des Sitzes 1 des Nutzfahrzeugs auch für längere Streckenabschnitte einen bequemen und sicheren Sitz, kann jedoch z.B. zu Reparaturzwecken entnommen werden. Zur Durchführung der Schwenk- und Drehbewegungen im Sinn der Erfindung ist das Sitzpolster 10 verliersicher in der Aufnahmeschale 7 angeordnet.

Der Schwenk-Drehmechanismus ist während der Fahrt bzw. durch eine Person durchführbar. Je nach Bedarf ist der Einsatz des Sitzfußes 2 in unterschiedlichen Höhen vorstellbar. Der Sitzfuß 2 kann z.B. die Form eines Sockels annehmen, der unter dem Sitz 1 im Inneren des Sitzfußes einen zusätzlichen Stauraum 9 bietet. Der Stauraum 9 ist durch den Sitz 1 nach oben abgeschlossen, unabhängig davon, ob die Rückseite des Sitzes 1 als Sitz, Stellfläche 26 oder als Standfläche genutzt wird. Es ist denkbar, je nach Höhe des Fahrerhauses den Sitzfuß 2 in seiner Höhe variabel zu gestalten. Wahlweise ist der Sitz 1 in eine, der jeweiligen Beinlänge des Benutzers entsprechende Sitzgelegenheit umrüstbar. Wahlweise kann der Sitz 1 aber auch als eine, mit einem betretbare Belag 22 versehene Stufe 24 nutzbar sein, die es z.B. ermöglicht, durch eine im Dach des Fahrerhauses angeordnete Öffnung auf das Dach des Fahrerhauses zu gelangen. Der Sitz 1 und der Sitzfuß 2 sind nach Bedarf ortsfest oder lösbar mit Boden des Fahrerhauses verankert.

Die Aufnahmeschale 7 des Sitzes 1 weist auf ihrer Rückseite 21 einen trittfesten Belag 22 auf. Dadurch ist gewährleistet, dass der Beifahrer, der auf dem trittfesten Belag 22 steht, auch bei Verunreinigung durch Schmutz, Schnee oder Eis, einen sicheren Halt findet.

Die durch das Scharnier 13 verlaufende Achse 15 bewirkt, dass die Aufnahmeschale 7 in allen Positionen ihrer Schwenk- und Drehbewegung positionsstabil ist und nicht aus ihrer Halterung gegenüber der Zunge 14 entnommen zu werden braucht. Ein Lösen der Aufnahmeschale 7 vom Sitzfuß 2 und ihre temporäre Zwischenlagerung sind daher nicht erforderlich.

Die dem Scharnier 13 gegenüberliegende Einfassung 8 der Aufnahmeschale 7 weist eine lösbare Arretierung 19 gegenüber dem Sitzfuß 2 auf. Die Arretierung 19 ist an jeder Oberkante 11 der Seitenwände 3 des Sitzfußes 2 anordenbar und bewirkt eine feste und sichere Verankerung der Aufnahmeschale 7 sowohl für die Nutzung des Sitzkissens 10 durch den Beifahrer als auch für die Rückseite 21 der Aufnahmeschale 7 als kippsichere Standfläche für den Beifahrer oder einen beliebigen Gegenstand.

### Bezugszeichenliste:

- 1: Sitz
- 2: Sitzfuß
- 3: Seitenwand des Sitzfußes
- 4: Hinteres Ende des Sitzfußes
- 5: Wangen
- 6: Rückenlehne
- 7: Aufnahmeschale
- 8: Einfassung
- 9: Stauraum
- 10: Sitzpolster
- 11: Oberkante
- 12: Vorderseite des Sitzfußes
- 13: Scharnier
- 14: Zunge
- 15: Achse des Scharniers
- 16: Drehachse
- 17: rückwärtige Seitenwand des Sitzfußes
- 18: Oberkante der rückwärtigen Seitenwand
- 19: Arretierung
- 20: Zapfen
- 21: Rückseite der Aufnahmeschale
- 22: Belag
- 23: Ausgangsposition
- 24: Stufe
- 25: strichpunktierte Linie
- 26: Strukturierte Stellfläche

## Patentansprüche

1. Auf der Oberseite gepolsterter Sitz (1), insbesondere eines Lastkraftwagens, umfassend einen Sitzfuß (2) und eine Aufnahmeschale (7), in der ein Sitzpolster (10) angeordnet ist, wobei die Aufnahmeschale (7) des Sitzes (1) über einen Schwenk-Drehmechanismus, zwangsgeführt in eine mit der Oberseite nach unten weisende Position bringbar ist und dann mindestens einem weiteren Zusatznutzen zugänglich ist, **dadurch gekennzeichnet, dass** die Aufnahmeschale (7) an einem Scharnier (13) befestigt ist, das entlang einer Oberkante (11) einer Vorderseite (12) des Sitzfußes (2) verläuft und dass die Aufnahmeschale (7) des Sitzes (1) um eine, entlang der Oberkante (11) durch das Scharnier (13) verlaufende Achse (15) schwenkbar gelagert ist und nach Herausschwenken aus einer Ausgangsposition (23) um eine senkrecht zur Achse (15) verlaufende Achse (16) drehbar gelagert ist.

2. Sitz nach Anspruch 1, **dadurch gekennzeichnet, dass** die Aufnahmeschale (7) nach Herausschwenken um etwa 90° aus der Ausgangsposition (23) um eine, senkrecht zum Scharnier (13), etwa durch dessen Mitte verlaufende Drehachse (16) drehbar ist.

3. Sitz nach Anspruch 2, **dadurch gekennzeichnet, dass** die durch das Scharnier (13) verlaufende Drehachse (16) mit diesem verbunden ist.

4. Sitz nach Anspruch 3, **dadurch gekennzeichnet, dass** die Aufnahmeschale (7) in einer gegenüber der Ausgangsposition (23) um 180° um die Drehachse (16) gedrehten Stellung, nach vorne in Richtung auf den Sitzfuß (2), in eine der Ausgangsposition (23) entsprechende Position schwenkbar ist.

5. Sitz nach Anspruch 1, **dadurch gekennzeichnet, dass** die Aufnahmeschale (7) auf ihrer Rückseite (21) betretbar ist.

6. Sitz nach Anspruch 5, **dadurch gekennzeichnet, dass** der Sitz (2) zur Sicherstellung der Betretbarkeit abgestützt ist.

7. Sitz nach Anspruch 5, **dadurch gekennzeichnet, dass** die Rückseite (21) einen trittfesten Belag (22) aufweist.

8. Sitz nach Anspruch 5, **dadurch gekennzeichnet, dass** die Rückseite (21) eine strukturierte Stellfläche (26) zum Abstellen von Gegenständen aufweist.

9. Sitz nach Anspruch 8, **dadurch gekennzeichnet, dass** die Stellfläche (26) Vorrichtungen zur lösbaren Befestigung der abgestellten Gegenstände aufweist.

10. Sitz nach Anspruch 5, **dadurch gekennzeichnet, dass** die Rückseite (21) Aufnahmevorrichtungen zur verliersicheren Halterung der Bordausrüstung aufweist.

11. Sitz nach einem oder mehreren der vorhergehenden Ansprüche 1 bis 4, **dadurch gekennzeichnet, dass** er zur lösbaren Verankerung gegenüber dem Sitzfuß (2) eine Arretierung (19) aufweist, die an der Seite des Sitzfußes (2) angeordnet ist, die dem Scharnier (13) gegenüber liegt.

## Claims

1. A seat (1) with upholstery on the upper side, in particular of a truck, comprising a seat base (2) and a holder shell (7), in which holder shell is arranged a seat cushion (10), whereby it is possible to bring the holder shell (7) of the seat (1), by means of a swivelrotary mechanism and in a positively driven manner, into a position where the upper side faces downwards and whereby consequently at least one further additional use is made possible, **characterised in that** the holder shell (7) is attached to a hinge (13), which hinge runs along an upper edge (11) of a front side (12) of the seat base (2), and **in that** the holder shell (7) of the seat (1) is mounted in a pivotable manner on an axis (15) that runs along the upper edge (11) through the hinge (13), and **in that** which holder shell, after having pivoted out from a starting position (23), is mounted in a rotatable manner on an axis (16) that runs vertical to the axis (15).

2. Seat in accordance with claim 1, **characterised in that** the holder shell (7), after having pivoted out by approx. 90° from the starting position (23), can be rotated around a axis(16) that runs vertically to, and approximately through the centre of the hinge (13).

3. Seat in accordance with claim 2, **characterised in that** the axis (16) that runs through the hinge (13) is connected to the hinge (13).

4. Seat in accordance with claim 3, **characterised in that** the holder shell (7) can be pivoted in a rotated position of 180° around the axis (16) relative to the starting position (23), forwards in the direction of the seat base (2), into a position that corresponds to the starting position (23).

5. Seat in accordance with claim 1, **characterised in that** it is possible to tread on the rear side (21) of the holder shell (7).

6. Seat in accordance with claim 5, **characterised in that** the seat (2) is supported in order to guarantee that it is possible to tread on the seat.

7. Seat in accordance with claim 5, **characterised in that** the rear side (21) features a coating (22) that can withstand being stepped on.

8. Seat in accordance with claim 5, **characterised in that** the rear side (21) features a structured set-down surface (26) for the placing of objects.

9. Seat in accordance with claim 8, **characterised in that** the set-down surface (26) features fittings with which it is possible to secure and release the placed objects.

10. Seat in accordance with claim 5, **characterised in that** the rear side (21) features holder fittings to hold on-board equipment in a captive manner.

11. Seat in accordance with one or several of the previous claims 1 to 4, **characterised in that** the seat features a lock (19) to anchor the seat to the seat base (2), and **in that** it is possible to release this anchor, which lock is arranged at the side of the seat base (2) that is positioned opposite to the hinge (13).

## Revendications

1. Siège rembourré sur le côté supérieur (1), en particulier d'un camion, comprenant un pied de siège (2) et une coque de réception (7) dans laquelle est disposé un rembourrage de siège (10), auquel cas la coque de réception (7) du siège (1) peut être amenée de manière forcée dans une position orientée avec le côté supérieur vers le bas par le biais d'un mécanisme de pivotement et de rotation et ensuite est accessible pour une utilisation supplémentaire, **caractérisé en ce que** la coque de réception (7) est fixée sur une charnière (13) qui court le long d'une arête supérieure (11) d'un côté avant (12) du pied de siège (2) et **en ce que** la coque de réception (7) du siège (1) est fixée de manière pivotable autour d'un axe (15) courant le long de l'arête supérieure (11) par la charnière (13) et est fixée de manière rotative après rabattement à partir de la position de départ (23) autour d'un axe (16) courant verticalement par rapport à l'axe (15).

2. Siège selon la revendication 1, **caractérisé en ce que** la coque de réception (7) peut être tournée, après rabattement d'environ 90° à partir de la position de départ (23) autour d'un axe de rotation (16) courant verticalement par rapport à la charnière (13), par exemple par son centre.

3. Siège selon la revendication 2, **caractérisé en ce que** l'axe de rotation (16) courant à travers la charnière (13) est relié à celle-ci.

4. Siège selon la revendication 3, **caractérisé en ce que** la coque de réception (7) peut pivoter dans une position tournée de 180° autour de l'axe de rotation (16) par rapport à la position de départ (23), vers l'avant orientée vers le pied de siège (2), dans une position correspondant à la position de départ (23).

5. Siège selon la revendication 1, **caractérisé en ce qu'**il est possible de monter sur le côté arrière (21) de la coque de réception (7).

6. Siège selon la revendication 5, **caractérisé en ce que** le siège (2) est en appui pour permettre de monter dessus.

7. Siège selon la revendication 5, **caractérisé en ce que** le côté arrière (21) présente un revêtement résistant pour monter dessus.

8. Siège selon la revendication 5, **caractérisé en ce que** le côté arrière (21) présente une surface de dépose structurée pour déposer des objets.

9. Siège selon la revendication 8, **caractérisé en ce que** la surface de dépose (26) présente des dispositifs pour attacher des objets déposés de manière desserrable.

10. Siège selon la revendication 5, **caractérisé en ce que** le côté arrière (21) présente des dispositifs de réception pour maintenir en toute sécurité le matériel de bord.

11. Siège selon une ou plusieurs des revendications 1 à 4 mentionnées précédemment, **caractérisé en ce qu'**il présente un dispositif de blocage (19) pour permettre un accrochage desserrable par rapport au pied de siège (2), ce dispositif de blocage (19) étant disposé sur le côté du pied de siège (2) qui se situe du côté opposé à la charnière (13).
